# EUROPEAN PATENT APPLICATION

(11) **EP 2 442 003 A1**
(43) Date of publication of application: **18.04.2012**
(21) Application number: 10290544.5
(22) Date of filing: 11.10.2010
(51) Int. Cl.: F16L 59/14, F16L 59/147, F16L 59/153

(54) **Thermally insulated pipe and method of manufacturing a thermally insulated pipe**

(71) Applicant: Alcatel Lucent, 75007 Paris (FR)
(72) Inventor: Pabst, Markus, 30163 Hannover (DE); Mlentkewitz, Olaf, 30952 Ronneberg (DE); Pönopp, Reinhard, 31199 Diekholzen (DE)
(74) Representative: Dreiss

(57) **Abstract**

The invention relates to a method of manufacturing a thermally insulated pipe (100') comprising the steps of: providing (200) an inner pipe (100), arranging (210) a thermally insulating medium (114) around said inner pipe (100), arranging (220) a heat shrinkable tube (116) around said thermally insulating medium (114), shrinking (230) said heat shrinkable tube (116) around said thermally insulating medium (114) and said inner pipe (100) by applying heat to said heat shrinkable tube (116), whereby said thermally insulated pipe (100') is obtained.

## Description

### Field of the Invention

The invention relates to a method of manufacturing a thermally insulated pipe.

The invention further relates to a thermally insulated pipe.

### Background

Insulated pipes may be used in different applications, e.g. for transport of a fluid such as a heat transfer fluid in solar collector systems. An insulation of said pipes has to fit quite firmly to the pipe in order to prevent a deterioration of the thermally insulating properties and the overall stability of the pipe. For instance, if the insulation does not properly fit the pipe, fluids and/or particles can migrate between the pipe and its insulation.

Thus, it is an object of the present invention to provide an improved method of manufacturing a thermally insulated pipe and an improved thermally insulated pipe which offer an efficient manufacturing process and which have a high degree of mechanical stability.

### Summary

According to the present invention, regarding the above mentioned method of manufacturing a thermally insulated pipe, this object is achieved by: providing an inner pipe, arranging a thermally insulating medium around said inner pipe, arranging a heat shrinkable tube around said thermally insulating medium, shrinking said heat shrinkable tube around said thermally insulating medium and said inner pipe by applying heat to said heat shrinkable tube, whereby said thermally insulating pipe is obtained.

According to applicant's analysis, this manufacturing method advantageously yields a pipe with superior thermal insulating properties and high mechanical stability, although no special tooling is required for the manufacturing process.

Particularly surprisingly, during the process, the thermal insulation is pressed by the shrinking heat shrinkable tube in a radial inner direction onto the inner pipe thus yielding a tight fitting of the thermally insulating material on the pipe and of the heat shrinkable tube on the thermally insulating material.

According to an embodiment, the heat shrinkable tube may comprise heat shrinkable materials also used for isolating electronic components. For instance, fluoropolymer material such as polytetrafluoroethylene (PTFE) and polyvinylidene fluoride (PVDF) material may be used for the heat shrinkable tube. Further materials may also be used.

According to an embodiment, said thermally insulating medium comprises a basically tubular shape, wherein said step of arranging said thermally insulating medium around said inner pipe comprises inserting said inner pipe into said thermally insulating medium in an axial direction. Thus, advantageously, a thermally insulating medium may be used which has a closed tubular hull offering a high degree of thermal insulation in every angular direction with respect to the inner pipe. The thickness of a wall of said thermally insulating medium may be chosen depending on the outer mechanical dimensions and/or the dimensions of the inner pipe and/or the degree of thermal insulation required.

According to a further embodiment, said thermally insulating medium comprises a basically tubular shape with an axial slit, i.e. a slit extending in an axial direction with respect to a longitudinal axis of said insulating medium, wherein said step of arranging said thermally insulating medium around said inner pipe comprises inserting said inner pipe into said thermally insulating medium in a substantially radial direction, i.e. by pushing said inner pipe through the axial slit in said insulating medium, which enables a very efficient insertion of the inner pipe into the thermally insulating medium. Advantageously, due to its basically tubular form, the heat shrinkable tube also covers the axial slit of the thermally insulating medium, and after shrinking the heat shrinkable tube, no substantial decrease of insulating effect of the thermally insulating medium due to the slit can be recognized.

According to a further embodiment, said step of arranging said heat shrinkable tube around said thermally insulating medium comprises inserting said thermally insulating medium, preferably together with said inner pipe, into said heat shrinkable tube in an axial direction. It is also possible to first insert the thermally insulating medium into the heat shrinkable tube, and after that to insert the inner pipe into the thermally insulating medium in an axial fashion, too.

According to a further embodiment, a length of said inner pipe and/or said thermally insulating medium and/or said heat shrinkable tube is greater than 2 m, preferably greater than 10 m. The inventive principle advantageously enables to manufacture thermally insulated pipes with a very large uninterrupted length thus avoiding the requirement to connect smaller pieces of several pipes to obtain thermally insulating pipes in excess of 2 m or even 10 m.

According to a further embodiment, said inner pipe is made of metal, especially stainless steel and/or copper, wherein said thermally insulating medium comprises an ethylene propylene diene monomer, EPDM, rubber material.

Instead of metal, the inner pipe may also comprise plastic material, preferably heat resistant plastic material that can be used for transporting fluids having a temperature of 200° C and above. Again, EPDM may be used as thermally insulating medium.

According to a further preferred embodiment, said inner pipe is a corrugated pipe, which enables a high flexibility regarding the integration of said pipe into a target system. Particularly, the provisioning of a corrugated inner pipe advantageously enables to employ comparatively small radii of curvature when integrating the thermal insulating pipe into installation channels of a building and the like.

According to a further embodiment, for said step of inserting said inner pipe into said thermally insulating medium, a radial inner opening of said thermally insulating medium comprises an inner diameter which is larger than an outer diameter of said inner pipe which enables a particularly efficient insertion of the inner pipe into the thermally insulating medium, which may be performed without special tooling and the like. This is particularly relevant if the thermally insulating medium does not comprise an axial slit which facilitates an integration of said inner pipe into said thermally insulating medium by a radial movement, but rather requires an axial insertion movement.

A further solution to the object of the present invention is given by a thermally insulated pipe according to claim 9. Said thermally insulated pipe comprises an inner pipe, a thermally insulated medium arranged around said inner pipe, and a heat-shrunk heat shrinkable tube around said thermally insulating medium.

According to an embodiment, said inner pipe is made of metal, especially stainless steel and/or copper. It is also possible to employ an inner pipe which is made of plastic material, preferably high-temperature resistant plastic material.

According to a further embodiment, said thermally insulated medium comprises an ethylene propylene diene monomer, EPDM, rubber material which comprises a comparatively large heat resistance.

According to a further embodiment, said inner pipe is a corrugated pipe which enables to apply small radii of curvature to the thermally insulated pipe thus increasing a flexibility of application of said pipe.

Preferably, according to a further embodiment, the thermally insulated pipe is flexible.

### Brief Description of the Figures

Further features, aspects and advantages of the present invention are given in the following detailed description with reference to the drawings in which:
- Figure 1a: schematically depicts a side view of an inner pipe according to an embodiment,
- Figure 1b: schematically depicts a front view of the inner pipe according to Figure 1a,
- Figure 2a: depicts a partial cross section of said inner pipe according to Figure 1a after having been inserted into a thermally insulating medium according to an embodiment,
- Figure 2b: schematically depicts a front view of the configuration according to Figure 2a,
- Figure 3a: depicts a partial cross section of the arrangement according to Figure 2a after insertion into a heat shrinkable tube,
- Figure 3b: depicts a front view of the configuration according to Figure 3a,
- Figure 4a: depicts a partial cross section of a thermally insulated pipe according to an embodiment,
- Figure 4b: depicts a front view of the configuration according to Figure 4a,
- Figure 5: depicts a simplified flow chart of a method according to the embodiments, and
- Figure 6: depicts a front view in a partial cross section of a thermally insulated pipe according to a further embodiment.

### Description of the Embodiments

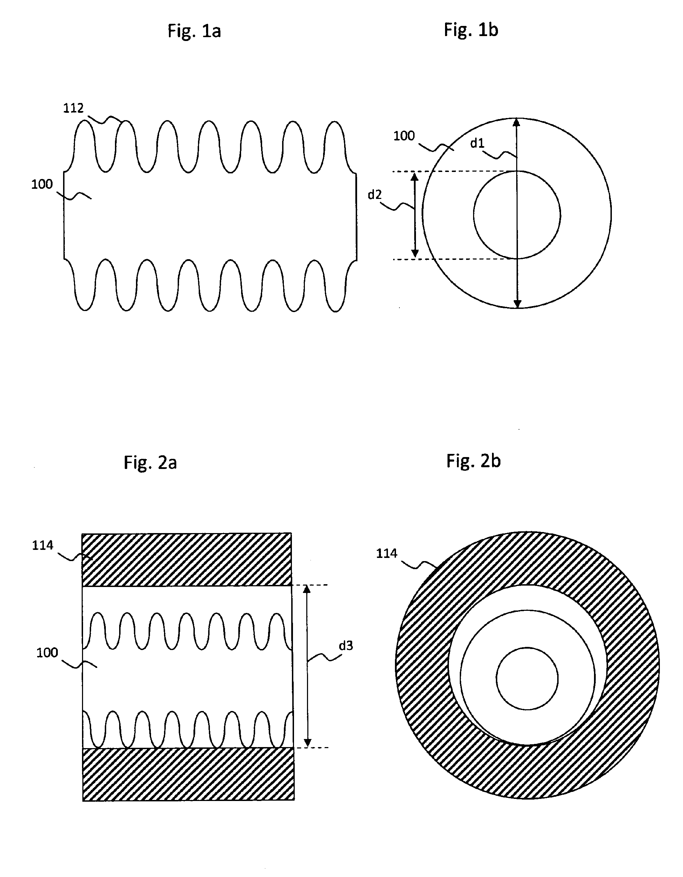

Figure 1a schematically depicts a side view of an inner pipe 100 which is employed to manufacture a thermally insulated pipe according to the embodiments. The inner pipe 100 may e.g. be made of metal such as stainless steel and/or copper. To ensure a sufficient mechanic flexibility of the inner pipe 100, according to a preferred embodiment, the inner pipe 100 is designed as a corrugated pipe, cf. the corrugations 112 according to Figure 1a.

The front view of Figure 1b of the inner pipe 100 according to Figure 1a depicts an outer diameter d1 of the inner pipe 100 and an inner diameter d2 of the inner pipe 100. The geometry of the corrugations 112 (Figure 1a) is determined according to the target system the inner pipe 100 is to be integrated in and/or depending on the material the inner pipe 100 is made of. Presently, the corrugations 112 radially extend out of the inner pipe's cylindrical surface by (d1-d2)/2.

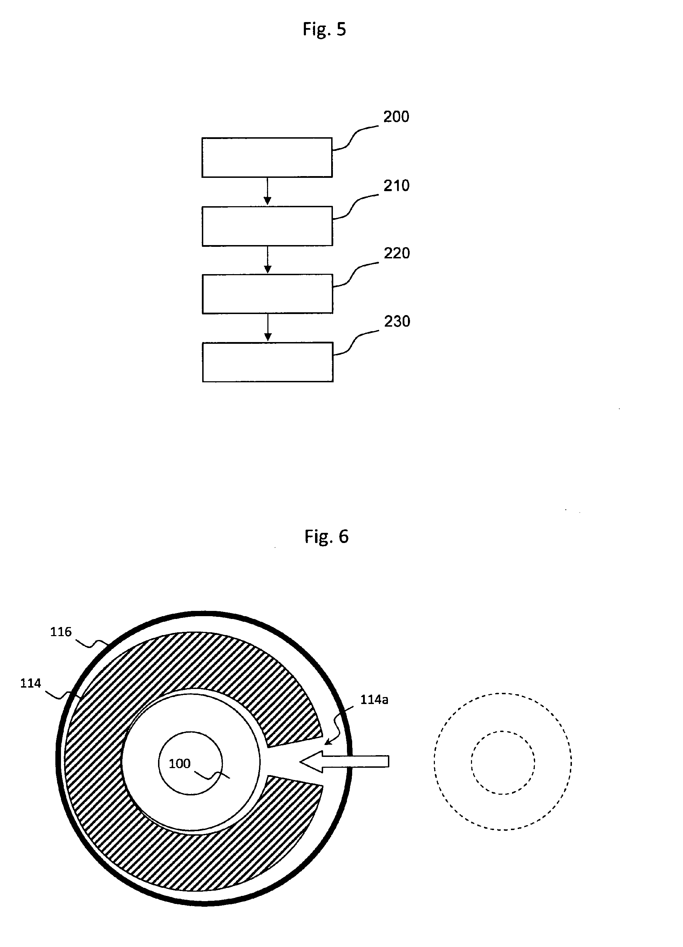

To manufacture a thermally insulated pipe on the basis of the inner pipe 100 depicted by Figures 1a, 1b, according to a first step 200, which is depicted by the flow chart of Figure 5, said inner pipe 100 is provided.

After that, according to step 210 of Figure 5, a thermally insulating medium 114 is arranged around said inner pipe 100.

Figure 2a depicts a partial cross section of a side view of the pipe 100 according to Figure 1a after it has been inserted into the thermally insulating medium 114. Preferably, as depicted by Figure 2a, said thermally insulating medium 114 comprises a basically tubular shape an inner opening of which has a diameter d3 which is larger than the outer diameter d1 (Figure 1b) of the inner pipe 100 to facilitate an easy insertion of the inner pipe 100 into the insulating medium 114 avoiding excessive friction.

The ratio of the diameters d3/d1 may e.g. range from about 101% to about 120% or even more. According to a preferred embodiment, said thermally insulated medium comprises an ethylene propylene diene monomer, EPDM, rubber material, which exhibits very good isolation properties as well as mechanical properties.

When using a thermally insulating medium 114 which comprises a basically tubular shape, the inner pipe 100 (Figure 2a) is inserted into said thermally insulating medium 114 by a relative movement of said inner pipe 100 with respect to the thermally insulating medium 114 in an axial direction with reference to a longitudinal axis of the component 114.

After the insertion, the situation depicted by Figure 2b is obtained. I.e., the inner pipe 100 is substantially coaxially arranged with respect to the thermally insulating medium 114 which surrounds said inner pipe 100. However, an inner surface of said thermally insulating medium 114 does not have full contact with the outer surface of the inner pipe 100 due to the ratio of the diameters d3/d1 being greater than 1.

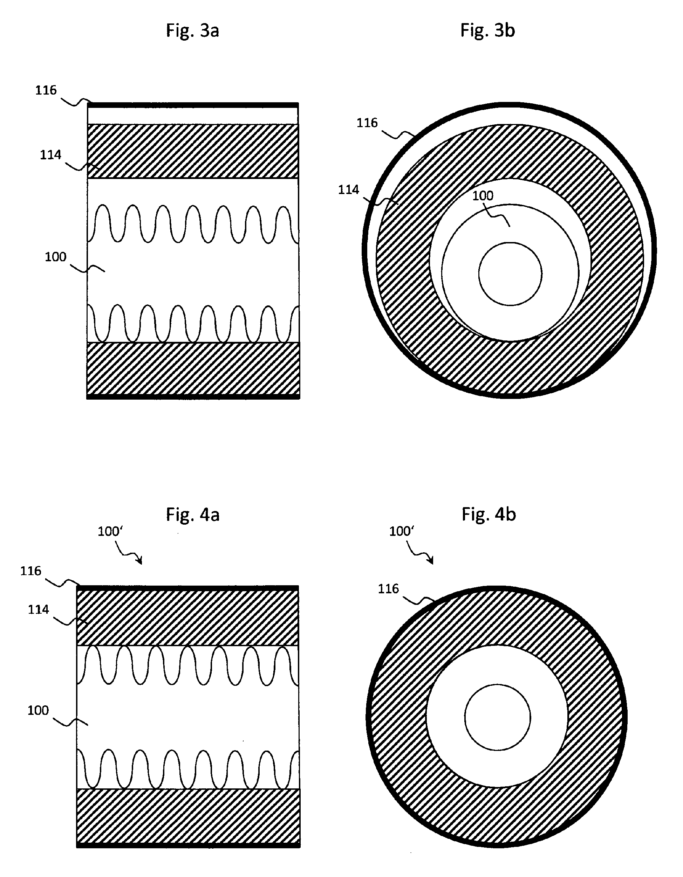

Thus, according to a further step 220 (Figure 5) of the method according to an embodiment, a heat shrinkable tube 116 (Figure 3a) is arranged around said thermally insulating medium 114 and said inner pipe 100. Preferably, an inner diameter of the heat shrinkable tube 116, which has not yet been heated to achieve shrinking, is larger than an outer diameter of the thermally insulating medium 114 so as to facilitate an insertion of the components 100, 114 into the tube 116 without suffering friction which could damage the components 114, 116.

The insertion of the arrangement 100, 114 into the tube 116 is preferably performed by an axial motion.

However, it is not necessary to insert both the inner pipe 100 and the thermally insulating medium 114 into the heat shrinkable tube 116 simultaneously. It is also possible to first insert the thermally insulating medium 114 into the heat shrinkable tube 116, and after that, the inner pipe 100 may be inserted into the thermally insulated medium 114 as already described above.

After inserting the inner pipe 100 and the thermally insulating medium 114 into the heat shrinkable tube 116, the configuration depicted by the front view of Figure 3b is attained. I.e., there is not yet a proper surface contact of the inner surface of the thermally insulating medium 114 to the outer surface of the inner pipe 100, and there is not yet a proper surface contact between the inner surface of the heat shrinkable tube 116 and the outer surface of the thermally insulating medium 114. Figure 3a depicts a side view of the arrangement of Figure 3b.

Thus, in a further step 230 (Figure 5) of the method according to an embodiment, said heat shrinkable tube 116 is shrunk around said thermally insulating medium 114 and said inner pipe 100 by applying heat to said heat shrinkable tube 116, whereby said thermally insulated pipe 100' (cf. the front view of Figure 4b) is obtained.

The application 230 of heat to the heat shrinkable tube 116 may be done by using hot air or another hot gas and/or infrared radiation or any other suitable source of heat that enables a proper shrinking process.

As can also be gathered from Figure 4a, after shrinking 230 (Figure 5) the heat shrinkable tube 116, the heat shrinkable tube 116 tightly surrounds the thermally insulating medium 114. Moreover, according to an analysis of the applicant, the thermally insulating medium 114 is also tightly pressed against an outer surface of the inner pipe 100 so that a tight contact is at least established between the thermally insulating material 114 and the corrugated parts 112 of the inner pipe 100.

The wall thickness of the respective involved components 114, 116 should be adapted to each other and/or to the degree of radius reduction during shrinking of the tube 116 to ensure that the shrinking tube 116 properly presses said insulating medium 114 against the inner tube 100.

The thermally insulated pipe 100', which has been obtained by the method according to the embodiment explained above with reference to Figure 5, advantageously exhibits a high mechanical stability due to the protective layer constituted by the heat shrinkable tube 116. At the same time, a high mechanical flexibility is attained by the corrugated inner pipe 100.

The configuration according to the embodiments explained above has the significant advantage that - due to the tight fitting of the heat shrinkable tube 116 to the thermally insulating medium 114 - no fluids or other substances can enter the space between the components 116 and 114 which would potentially deteriorate the thermal insulation provided by the thermally insulating medium 114.

According to a further embodiment, instead of metal, plastic material may also be used to form the inner pipe 100. Preferably, said plastic material is a high temperature resistant plastic material.

According to a further embodiment, said thermally insulating medium 114 comprises a basically tubular shape with an axial slit 114a, cf. Figure 6. This axial slit 114a enables an easy and efficient insertion of the inner tube 100 into the thermally insulating medium 114 by radial insertion movement as depicted by the block arrow of Figure 6. After the radial insertion of the inner pipe 100 into the thermally insulating medium 114, the components 100, 114 are inserted into the heat shrinkable tube 116, preferably in an axial fashion, and the heat shrinkable tube 116 is heated so as to radially contract in a per se known manner thus again effecting a tight fit between the inner surface of the heat shrinkable tube 116 and the outer surface of the thermally insulating medium 114.

The shrinking movement of the heat shrinkable tube 116 also advantageously causes a closing movement of the thermally insulating medium 114 in a circumferential direction which effects a nearly complete closure of the slit 114a over the complete length of the thermally insulating medium 114. Thus, an efficient thermal insulation for the inner pipe 100 is effected over the whole circumference of the inner pipe 100, i.e. in the area of the former slit 114a, too.

Due to its protective outer layer realised by the tube 116, the thermally insulated pipe 100' exhibits a mechanical ruggedness which enables to use it for all kinds of utility installations, particularly such utility installations which involve the transport of high temperature fluids, as required for solar collectors, heating systems, and the like.

For instance, the thermally insulated pipe 100' may advantageously be employed for transport of a heat exchange fluid such as a mixture of water and propylene glycol, which may e.g. be used for heat transport between solar collectors and a hot water tank.

Although a corrugated inner pipe 100 is particularly preferred due to its mechanical flexibility, it is also possible to provide thermally insulated pipes according to the embodiments which comprise no corrugations 112 (Figure 1a).

Apart from the components explained above with reference to the drawing, further layers of, preferably tubular, material (e.g., for additional shielding) and/or electrical conductors and/or optical fiber may be added to the insulated pipe according to some other embodiments. Electrical conductors and/or optical fiber may also be arranged in the axial slit 114a.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of manufacturing a thermally insulated pipe (100') comprising the steps of: providing (200) an inner pipe (100), arranging (210) a thermally insulating medium (114) around said inner pipe (100), arranging (220) a heat shrinkable tube (116) around said thermally insulating medium (114), shrinking (230) said heat shrinkable tube (116) around said thermally insulating medium (114) and said inner pipe (100) by applying heat to said heat shrinkable tube (116), whereby said thermally insulated pipe (100') is obtained.

2. Method according to claim 1, wherein said thermally insulating medium (114) comprises a basically tubular shape, and wherein said step of arranging (210) said thermally insulating medium (114) around said inner pipe (100) comprises inserting said inner pipe (100) into said thermally insulating medium (114) in an axial direction.

3. Method according to one of the preceding claims,
wherein said thermally insulating medium (114) comprises a basically tubular shape with an axial slit (114a), and wherein said step of arranging (210) said thermally insulating medium (114) around said inner pipe (100) comprises inserting said inner pipe (100) into said thermally insulating medium (114) in a substantially radial direction.

4. Method according to one of the preceding claims,
wherein said step of arranging (220) said heat shrinkable tube (116) around said thermally insulating medium (114) comprises inserting said thermally insulating medium (114), preferably together with said inner pipe (100), into said heat shrinkable tube (116) in an axial direction.

5. Method according to one of the preceding claims,
wherein a length of said inner pipe (100) and/or said thermally insulating medium (114) and/or said heat shrinkable tube (116) is greater than 2 meters, preferably greater than 10 meters.

6. Method according to one of the preceding claims,
wherein said inner pipe (100) is made of metal, especially stainless steel and/or copper, and wherein said thermally insulating medium (114) comprises an ethylene propylene diene monomer, EPDM, rubber material.

7. Method according to one of the preceding claims,
wherein said inner pipe (100) is a corrugated pipe.

8. Method according to one of the preceding claims, wherein, for said step of inserting (210) said inner pipe (100) into said thermally insulating medium (114), a radial inner opening of said thermally insulating medium (114) comprises an inner diameter (d3) which is larger than an outer diameter (d1) of said inner pipe (100).

9. Thermally insulated pipe (100') comprising an inner pipe (100), a thermally insulating medium (114) arranged around said inner pipe (100), and a heat-shrunk heat shrinkable tube (116) around said thermally insulating medium (114).

10. Pipe (100') according to claim 9, wherein said inner pipe (100) is made of metal, especially stainless steel and/or copper.

11. Pipe (100') according to claim 9, wherein said inner pipe (100) is made of plastic material.

12. Pipe (100') according to one of the claims 9 to 11, wherein said thermally insulating medium (114) comprises an ethylene propylene diene monomer, EPDM, rubber material.

13. Pipe (100') according to one of the claims 9 to 12, wherein said inner pipe (100) is a corrugated pipe.

14. Pipe (100') according to one of the claims 9 to 13, wherein said pipe (100') is flexible.
